# EUROPEAN PATENT APPLICATION

(11) **EP 0 610 166 A1**
(43) Date of publication of application: **10.08.1994**
(21) Application number: 94850017.8
(22) Date of filing: 04.02.1994
(51) Int. Cl.: H01J 61/56, H01J 61/54, H01J 61/32

(54) **A method for producing a compact fluorescent lamp and a compact fluorescent lamp produced in accordance with the method**

(30) Priority: 04.02.1993 SE 9300340
(71) Applicant: Lumalampan Aktiebolag, S-371 23 Karlskrona (SE)
(72) Inventor: Axelsson, Torsten, S-371 63 Lyckeby (SE)
(74) Representative: Norin, Klas

(57) **Abstract**

A method for manufacturing compact fluorescent lamps of the kind which include gas discharge tubes (17, 18) provided with an inner fluorescent coating and electrodes, and a base (6) which houses an ignition device (4), capacitor (5) and contact pins (8, 9) for powering and operating the fluorescent lamp, wherein a holder (16) is fitted to the ignition device (4) such as to fixate two contact pins (14, 15) thereon and first connecting leads (12, 13) from the ignition device (4) and the capacitor (5) are connected to the first contact pin (14) so as to form a unit, wherein second connecting leads from the respective ignition device and capacitor are connected to the second contact pin, whereupon the electrode connecting leads (11a, b) are connected to the contact pins (14, 15) and the unit comprising the ignition device and the capacitor is placed in the base part (6).

## Description

The present invention relates to a method for producing a compact fluorescent lamp of the kind which includes a gas discharge tube which is provided with an inner fluorescent coating and electrodes, and a base which houses an ignition device or starter, a capacitor and connector pins for powering and operating the fluorescent lamp, wherein the ignition device and the capacitor are housed in an elongated central chamber in the base, wherein a tube part which includes the gas discharge tube and a base part are produced separately, wherein the ignition device, capacitor and electrodes are mutually connected and accommodated in an elongated central chamber in the base part, and the tube part and the base part are joined together. The invention also relates to a compact fluorescent lamp produced in accordance with the inventive method.

One problem encountered in the production of compact fluorescent lamps is that several groups of electrical connecting leads extending from several different components must be connected together. In order for manufacture of the lamps to be economical, it is necessary to effect these connections automatically, resulting in a multi-stage operation and in the need for complicated manufacturing equipment to achieve the requisite precision in manufacture.

An example of the technique employed when producing compact fluorescent lamps is found in U.S. Patent specification US-A-4,853,583. This technique involves placing over one end of the tube part a cover or cap which is provided with inner guide walls which widen outwardly in a funnel-like configuration and function to guide connecting leads from the electrodes of the gas discharge tube out towards the side of the cap adjacent its end opening. When these connecting leads have been inserted into the cap, the ignition device and then the capacitor are fitted into the cap with the connecting leads bent outwards and, at the same time, bent in a manner such as to form two wire bunches, each comprising three leads at the upper cap opening. The leads are then seized and connected together. The cap is closed with a lid subsequent to having connected the leads together. This method of manufacture requires many manufacturing steps and must also be extremely precise in order to ensure that assemblage is correct and is thus also expensive.

The object of the present invention is to provide a method in which compact fluorescent lamps can be produced more economically and also which simplifies connecting the connecting leads to the tube components.

This object is achieved with the inventive method having the characteristic features set forth in the following Claims.

The invention provides a substantially simplified manufacturing technique. The connecting leads of the capacitor and the ignition device are mutually connected with the aid of contact pins on the holder. This is very simple from a technical aspect of manufacture. When configured appropriately, the holder fitted to the ignition device can function as a guide for positioning the ignition device and capacitor in the base part of the fluorescent lamp, which also makes manufacture less expensive besides simplifying manufacture. The electrode connection leads are connected to the contact pins on the holder in a single step, this step also being a simple technical step from the aspect of manufacture. The unit consisting of the holder, the ignition device and the capacitor hanging from the unit can be inserted into the base part either before or after connecting the leads of the tube electrodes to the contact pins. The contact pins are conveniently tubular so as to enable the leads to be connected by squeezing the pins.

The invention also relates to a compact fluorescent lamp comprising a gas discharge tube provided with an inner fluorescent coating and electrodes, and a base which houses an ignition device, capacitor and contact pins for powering and operating the fluorescent lamp, wherein the ignition device and the capacitor are housed in an elongated central chamber in the base, produced in accordance with the method according to Claim 1. The inventive compact fluorescent lamp is characterized in that the ignition device and the capacitor are mutually connected to form a unit with the aid of a first and a second contact pin mounted on a holder; in that a first connecting lead from each of the ignition device and the capacitor is connected to the first contact pin; in that a second connecting lead from each of the ignition device and the capacitor is connected to the second contact pin; in that the electrode connecting leads are connected to the contact pin; and in that the holder is adapted to fix the contact pins to the ignition device.

Other objects, advantages and characteristic features of the invention will be evident from the following description which is made with reference to a preferred exemplifying embodiment of the invention and also with reference to the accompanying drawing, in which
- Fig. 1: is a partially cut-away side view of a compact fluorescent lamp produced in accordance with the present invention;
- Fig. 2: is a side view of the gas discharge tube and shows a base-part attachment rim and the electrode connecting leads;
- Fig. 3: is a side view of an ignition device-capacitor-unit provided with a holder in accordance with the present invention;
- Figs. 4a and 4b: illustrate respectively the holder from above and from one side; and
- Fig. 5: is a side view of the base part.

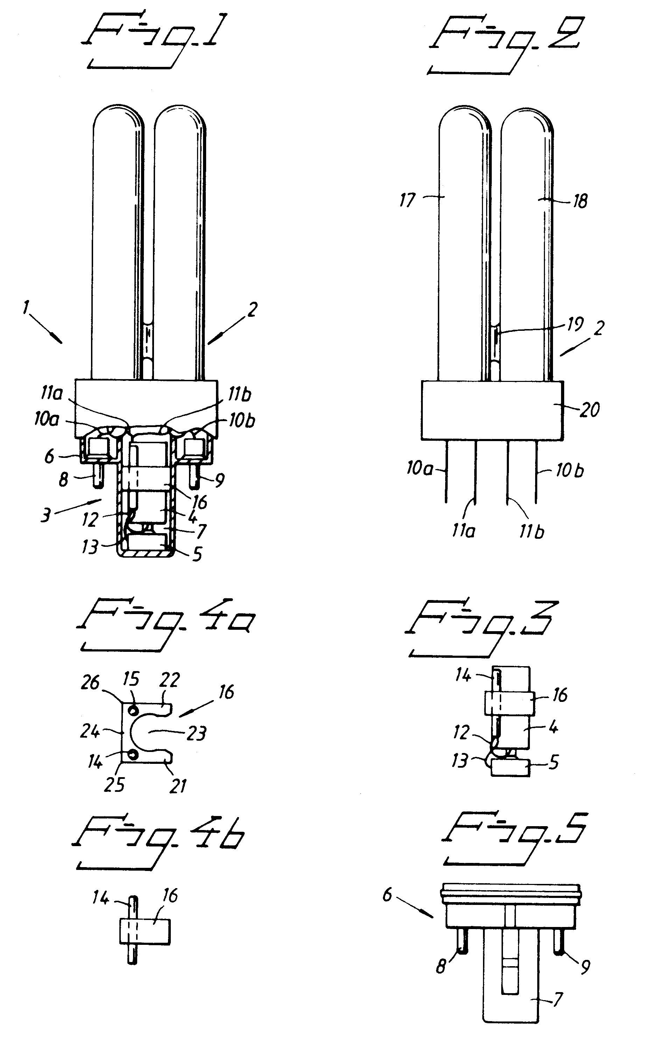

Fig. 1 is a partially cut-away side view of a preferred embodiment of an inventive compact fluorescent lamp, which is identified generally by the reference numeral 1. The fluorescent lamp is comprised of a gas discharge tube 2 and an ignition device-capacitor part 3. The ignition device 4 and the capacitor 5 are mounted in a base part 6, more specifically in an elongated central chamber 7 in the base part. The base part 6 also includes contact pins 8, 9 by means of which current is supplied to the compact fluorescent lamp. Electrodes, not shown, in the gas discharge tube are connected to the contact pins and also to the ignition device and the capacitor, by means of leads 10a, b and 11a, b respectively.

In the preferred embodiment, connecting leads 12, 13 extending from the ignition device 4 and the capacitor 5 respectively are inserted from one end into tubular contact pins 14, 15 (see Fig. 4a), while the electrode connecting leads are inserted into the opposite ends of the pins. In the illustrated embodiment, the contact pins for connecting the respective connecting leads are fixed to the ignition device by means of a holder 16, which will be described in more detail below.

Fig. 2 illustrates the gas discharge tube part 2 which is comprised of a gas discharge tube 17, 18 which are mutually connected by a bridge 19 and each of which has an inner coating of fluorescent material. The tubes are affixed conventionally in a holder part which includes a rim 20 which also functions as a fitting for the base part 6. The connecting leads or current conductors 10a, b and 11a, b extend from the ends of respective gas discharge tubes fixed in the holder part.

Fig. 3 illustrates the ignition device 4 and the capacitor 5 which are brought together by means of the holder 16 to form an ignition-capacitor unit. A preferred embodiment of the holder is shown in Figs. 4a and 4b. The external shape of the holder is adapted to the cross-sectional shape of the central elongated chamber in the base part, and has a square or rectangular shape in the case of the illustrated embodiment. The holder has two legs 21, 22 which define therebetween a generally semi-circular space 23 which functions to hold the ignition device firmly between the legs. The legs are preferably configured so as to enable them to be snapped firmly around the ignition device and hold said device by friction. The holder 16 also includes a base part 24 and two outer corner parts 25, 26 at the junction between the base part and the leg parts. The outer surfaces of the holder 16 are flat and are disposed at right angles to one another, whereas the inner surface of the holder is generally semi-circular in shape (at 23). The holder also carries the contact pins 14, 15 which extend completely through the holder and which are preferably tubular so as to enable the connecting leads to be connected simply by squeezing the pins. The holder is manufactured conveniently from a plastic material.

As illustrated in Fig. 3, the ignition device and the capacitor can be combined to form a unit, by fitting the holder onto the ignition device and inserting a connecting lead 12, 13 from the ignition device 4 and the capacitor 5 respectively into a respective contact pin 14, 15. After connecting the leads to the contact pins, the capacitor 5 will hang on the leads beneath the ignition device and the object of simplifying manufacture has therewith been achieved insomuch that the ignition device and the capacitor can be connected to the electrode connecting leads solely through the medium of two contact pins.

Fig. 5 is a side view of the base part which includes voltage supply contact pins and which is adapted to be fitted to the rim part on the gas discharge tube part. The electrode connecting leads 11a, b can be connected to the contact pins 14, 15 prior to placing the unit comprising said ignition device and capacitor in the central chamber of the base part, or may be connected to said contact pins after having placed the unit in the base part. Irrespective of the procedure adopted, it is only necessary to connect one connecting lead to each contact pin, i.e. to the contact pin 14, 15 in the holder and to the contact pin 8, 9 of the base part. This is a considerable simplification in comparison with earlier known techniques and results in lower manufacturing costs for the finished compact fluorescent tube.

It will be understood that the invention is not restricted to the aforedescribed preferred embodiment thereof. For instance, the central chamber in the base part and therewith also the outer shape of the holder may have different cross-sectional forms than those illustrated. Similarly, the ignition device can be secured in the holder in some way other than by a snap-on action, even though this would appear to be the most suitable solution at present. The connecting leads or current conductors can be secured in the contact pins in some way other than by squeezing the pins onto the leads, for instance by gluing or by soldering the leads in the pins.

## Claims

1. A method for manufacturing compact fluorescent lamps of the kind which include gas discharge tubes provided with an inner fluorescent coating and electrodes, and a base which houses an ignition device, capacitor and contact pins for powering and operating the fluorescent lamp, wherein the ignition device and the capacitor are housed in an elongated central chamber in the base, wherein a lamp part which includes the gas discharge tube and a base part are each produced separately; wherein ignition device, capacitor and electrodes are connected to one another and accommodated in an elongated central chamber in the base part, and wherein the lamp part and the base part are joined together, **characterized** by fitting to the ignition device (4) a holder (16) such as to fixate two contact pins (14, 15) thereon; connecting first connecting leads (12, 13) from the ignition device (4) and the capacitor (5) respectively to the first contact pin (14) so as to mutually connect the ignition device (4) and the capacitor (5) to form a unit; connecting second connecting leads from the respective ignition device and capacitor to the second contact pin; connecting the electrode connecting leads (11a, b) to the contact pins (14, 15); and placing the unit comprising said ignition device and said capacitor in the base part (6).

2. A method according to Claim 1, **characterized** by placing the ignition device/capacitor unit in the base part (6) after connecting the electrode connecting leads (11a, 11b) to the contact pins (14, 15).

3. A method according to Claim 1 or 2, **characterized** by guiding and fixing the ignition device/capacitor unit with the aid of the holder (16) while bringing said unit to its terminal position in the base part (6).

4. A method according to any one of the preceding Claims, **characterized** by fitting the contact pins (14, 15) firmly in the holder (16) and thereafter fitting the holder to the ignition device (4).

5. A method according to any one of the preceding Claims, **characterized** by clamping the holder (16) firmly onto the ignition device (4) with the aid of two snap-locking legs (21, 22).

6. A compact fluorescent lamp comprising a gas discharge tube provided with an inner fluorescent coating and electrodes, and a base which houses an ignition device, a capacitor and contact pins for powering and operating the fluorescent lamp, wherein the ignition device and the capacitor are accommodated in an elongated central chamber in the base, **characterized** in that the compact fluorescent lamp includes a holder (16) which is provided with a first and a second contact pin (14, 15) by means of which the ignition device (4) and the capacitor (5) are mutually connected to form a unit; in that the first contact pin (14) is intended to receive a first connecting lead (12, 13) from each of the ignition device and capacitor; in that the second contact pin (15) is intended to receive a second connecting lead from each of the ignition device and the capacitor; in that the electrode connecting leads (11a, 11b) are connected to the contact pins (14, 15); and in that the holder (16) is adapted to fixate the position of the contact pins (14, 15) at the ignition device (4).

7. A compact fluorescent lamp according to Claim 6, **characterized** in that the holder (16) includes a U-shaped plastic body which includes two legs (21, 22) which are intended to grip around the ignition device (4), wherein a lamp part (2) which includes the gas discharge tubes (17, 18), and a base part (6) are produced separately; the ignition device (4), the capacitor (5) and the electrodes are mutually connected and accommodated in an elongated central chamber (7) in the base part (6), and the lamp part (2) and the base part (6) are joined together.

8. A compact fluorescent lamp according to Claim 6 or 7, **characterized** in that the outer shape of the holder (16) is adapted to the cross-sectional shape of the elongated central chamber (7) in the base part (6).

9. A compact fluorescent lamp according to any one of Claims 7-8, **characterized** in that the holder (16) includes a base part (24), said legs (21, 22) and two outer corner parts (25, 26) at the junction between the base part and the legs; and in that the outer surfaces of the holder (16) are flat and extend mutually at right angles to one another, while the inner surface is essentially semi-circular in shape (at 23).

10. A compact fluorescent lamp according to Claim 9, **characterized** in that the contact pins (14, 15) extend through the corner parts (25, 26) and project out from two sides of the holder, so as to receive on one side the connecting leads (12, 13) from the ignition device and the capacitor and to receive the connecting leads (10a, 10b) from the electrodes on the other side.
